# EUROPEAN PATENT APPLICATION

(11) **EP 2 597 423 A1**
(43) Date of publication of application: **29.05.2013**
(21) Application number: 11009255.8
(22) Date of filing: 22.11.2011
(51) Int. Cl.: G01C 21/20, G08B 17/00

(54) **Indoor navigation and localisation system and method to locate a mobile unit**

(71) Applicant: Astrium GmbH, 82024 Taufkirchen (DE)
(72) Inventor: Mink, Michael, 81671 München (DE)
(74) Representative: Avenhaus, Beate

(57) **Abstract**

An indoor navigation and localisation system, in particular emergency case navigation and localisation system, preferably in a building (1), having a plurality of stationary transmitters (22', 24') adapted to transmit localisation signals and at least one mobile unit (3) with a mobile receiver (30) adapted to receive said localisation signals is characterized in that said at least one stationary transmitter (22', 24') is associated to one of a plurality of emergency facilities (22, 24) and in that each of said stationary transmitters (22', 24') is adapted to transmit an individual location identification message.

## Description

The present invention is directed to an indoor navigation and localisation system as defined in the preamble of claim 1. The invention further concerns a method to locate a mobile unit within such a system

### FIELD OF THE INVENTION

Navigation within a building is very difficult as the signals from navigation satellites can usually not or not sufficiently be received within a building. It is thus necessary to install navigation signal transmitters in a building which requires the installation of a navigation system infrastructure in the building and which is thus very expensive.

### BACKGROUND OF THE INVENTION

Navigation within a building is very important for people who are not familiar with the floor plans of the building in particular in case of an emergency situation like a fire inside the building. In such an emergency situation it is also very important for rescue personnel like fire fighters to be able to navigate within the building even in case of smoke inside the building. It is also very important for the fire fighters control room to always know where the fire fighters are inside the building.

Fire fighters need to know their approximate position in a building. They need to know at which floor and in which corner of the building they are. That information on a reliable basis is important. Realizing the inventive concept described in this document can provide such information. It is absolutely sufficient to know a rough position in the building. As soon as the fire fighters get close enough to each other they are able to find each other with the help of other instruments (i.e. with acoustic signals from whistles).

### OBJECT OF THE INVENTION

It is thus an object of the present invention to provide an indoor navigation and localisation system that can be easily installed and that is even working in an emergency situation.

It is a further object of the invention to provide a message to locate a mobile unit within an indoor navigation and localisation system according to the invention.

### SUMMARY OF THE INVENTION

The object directed to the indoor navigation and localisation system is achieved by a system with the features of claim 1.

The provision of the stationary navigation and localisation signal transmitters associated to emergency facilities remarkably reduces the costs for the installation of this navigation and localisation system. As it is obligatory to install emergency systems (like sprinklers or fire alarms) in a building the installation of said navigation transmitters associated to said emergency facilities can be carried out in the same installation process which remarkably reduces the costs for erecting the building.

In a preferred embodiment said stationary navigation and localisation signal transmitter is mounted to or integrated in said emergency facility. This solution further reduces the installation effort and in particular the integration of the stationary transmitter in said emergency facility leads to a combined installation procedure of the emergency facilities and the stationary transmitters.

In a preferred embodiment said stationary transmitter comprises an autonomous power source. Such an autonomous power source ensures a reliable operation of the navigation and localisation system even in case of an electrical power outage.

Additionally or alternatively said stationary transmitter is powered by a power source of the emergency facility.

In another alternative embodiment said stationary transmitter comprises an RFID-unit which reacts in response to a received request signal transmitted from said mobile receiver. The RFID-unit can be a passive RFID-unit or an active RFID-unit having an own power source.

Preferably the RFID-unit is a passive RFID-unit powered by said received request signal from said mobile transmitter. This embodiment has the advantage that there is no battery maintenance necessary for the stationary transmitter, however, the working distance of such a passive RFID-transmitter is not very large.

It is advantageous when said emergency facility is a fire alarm indicator, a sprinkler or an emergency exit indicator. These emergency facilities are usually provided in the rooms and corridors of each floor of the building. In particular an integration of a stationary transmitter in a sprinkler has the advantage that the transmitter network is identical to the sprinkler network so that the whole building is covered also by stationary transmitters.

A big disadvantage of using transmitters within buildings is the estimation of their positions and their mapping respectively in adequate maps or comparable. This might be very time- and cost-consuming. With the solution according to the invention of associating the transmitters to emergency facilities (preferably integrating the transmitters therein) this disadvantage is overcome.

In a preferred further development of the system according to the invention the system further comprises a central control unit having a central receiver and said mobile unit is provided with a mobile transmitter adapted to transmit an individual mobile unit identification message to said central receiver. The central receiver receives the individual mobile unit identification message together with the individual location identification message received by the mobile unit so that the central receiver always knows the position of each individual mobile unit. This is very advantageous in case of monitoring persons, e.g. fire fighters, in an emergency case inside a building.

Preferably, said mobile unit is provided with a clock adapted to generate time stamp messages and to transmit said time stamp messages via the mobile transmitter to said central receiver. This transmission of a time stamp message enhances the monitoring ability because the movements of each mobile unit, e.g. of each fire fighter, can be traced.

It is also advantageous when said localisation signals transmitted by said stationary transmitters and received by said mobile receivers are radio frequency (RF) signals. However, it is also possible that any other wireless communication technology is used for transmitting the signals.

The object of the present invention directed to the method is solved by a method with the features of claim 10.

This method to locate a mobile unit within an indoor navigation and localisation system according to the invention comprises the steps of receiving a location identification message with said mobile unit from a stationary transmitter; transmitting said received location identification message together with a mobile unit identification message and a time stamp message from the mobile unit to said central control unit; and identifying the location of said mobile unit on the basis of said received identification messages. This method allows a reliable monitoring and tracing of the mobile units within said indoor navigation and localisation system. It is particularly useful in an emergency case where e.g. fire fighters need to be monitored in a burning building.

The invention is hereinafter described by example with reference to the drawings. In these drawings
- **Fig. 1**: shows a schematic view of an installation of stationary transmitters of an indoor navigation and localisation system;
- **Fig. 2**: shows an example of a floor plan of a building with marked coverage areas of the stationary transmitters.

### DETAILED DESCRIPTION OF THE INVENTION

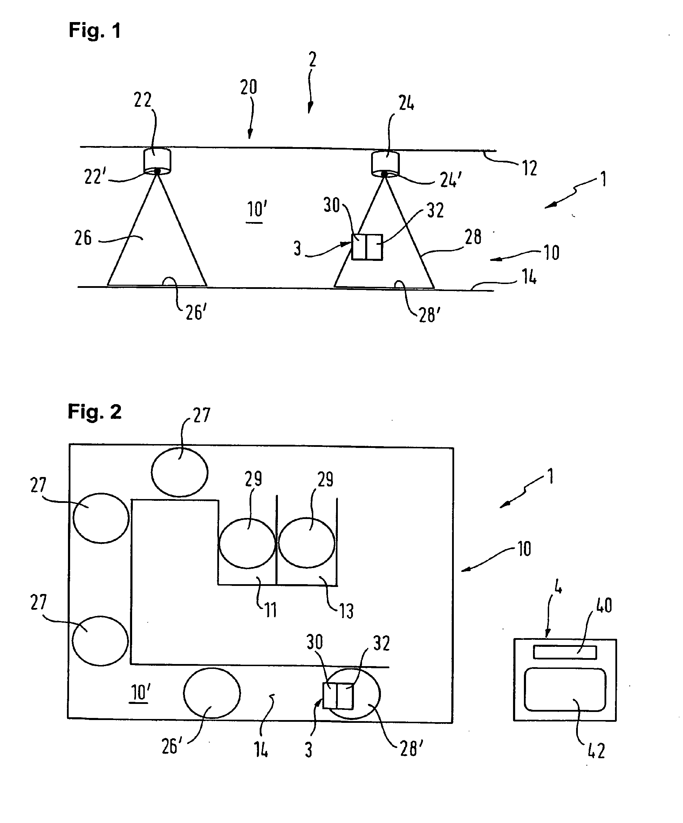

Fig. 1 shows schematically a part of a corridor 10' on a floor 10 of a building 1 with a floor ceiling 12 and a ground floor 14. Schematically indicated sprinklers 22, 24 of a fire sprinkling system 20 which is part of an emergency facility system 2 comprising as emergency facilities besides sprinklers 22, 24 also fire alarm indicators (not shown) and emergency exit indicators (not shown).

The emergency facilities, in fig. 1 the shown sprinklers 22, 24, comprise stationary transmitters 22', 24' which are associated to the respective sprinklers 22, 24 of a sprinkling system. In the shown embodiment each one of the stationary transmitters 22', 24' is mounted to a sprinkler 22, 24 or integrated therein. Each stationary transmitter 22', 24' is equipped with an autonomous power source and transmits an individual navigation and localisation signal comprising a location identification message (identificator) of a downwardly directed beam 26, 28. Every beam covers a footprint 26', 28' on the ground floor 14 which can also be seen in fig. 2.

Fig. 2 shows a floor plan of the floor 10 in building 1. Besides footprints 26' and 28' footprints 27 of other stationary transmitters (not shown) are provided on the ground floor 14 of corridor 10' and, by example, footprints 29 of stationary transmitters (not shown) are provided in rooms 11, 13 of floor 10.

A mobile unit 3 comprising a mobile receiver 30 and a mobile transmitter 32 is located in the corridor 10' of floor 10 inside the beam 28 above the footprint 28'. The mobile receiver 30 receives a localisation signal transmitted from said stationary transmitter 24'.

The mobile receiver 30 of a mobile unit 3 is located in the corridor 10' of floor 10 inside the beam 28 above the footprint 28'. The mobile receiver 30 receives a navigation and localisation signal transmitted from said stationary transmitter 24'. The mobile receiver 30 can retrieve the present location from a database on the basis of the received navigation and localisation signal which comprises an identificator for the stationary transmitter from which the signal was received. This database may be stored in a memory of the mobile receiver 30 or may be stored in a remote memory unit to which the mobile receiver 30 has wireless access. The retrieved position is shown on a graphic display of the mobile receiver 30 as it is commonly known from navigation receivers.

Besides this navigation capability also a localisation capability is provided in the system shown in figs. 1 and 2. The mobile unit 3 transmits the received navigation and localisation signal together with an identifier for the mobile receiver 30 to a central control unit 4 schematically shown in fig. 2. The central control unit 4 is provided with a central receiver 40 and a display 42 on which the position of each mobile unit can be displayed together with a floor plan of the building 1.

The mobile transmitter 30 also transmits a timestamp to the central control unit 4 so that it can be displayed on the display 42 whether a particular mobile unit is moving.

The principal idea of the present invention is thus to integrate low cost and space saving stationary transmitters, e.g. RF-transmitters, in safety relevant arrangements like emergency facilities. These emergency facilities are mandatory by law to be integrated into a building and to be mapped respectively in public facilities like official rescue plans. As the maintenance of this emergency facility infrastructure needs to be done every specific period of time, there are no additional investment costs necessary for implementation and maintenance of the stationary transmitters.

The indoor navigation and localisation system can be used in case of an emergency, like during a fire-fighting operation, as well as in regular operations (i.e. for facility management). The coverage of the stationary transmitters is limited to smaller areas wherein each such area is related to an identificator of the stationary transmitter covering the respective area. A receiver which is placed in said area would then receive the identificator and send it out to the central control unit together with the identificator of the receiver as well as a timestamp. The identificator of the receiver and the time stamp are continuously transmitted to the central control unit even when the receiver leaves the area covered by the stationary transmitter. When the mobile receiver enters an area of another stationary transmitter the now received identificator of said other stationary transmitter is transmitted from the mobile receiver to the central control unit so that the mobile receiver can be localised again. In case of an emergency, heat and fire could impact the content of the signals in a negative way. The time stamp will allow the software of the central control unit to trace back the track of the mobile unit which will help the person carrying the mobile unit to find the way back out of the floor or building even if the visibility is restricted, e.g. by smoke. As safety relevant arrangements of an emergency facility are available every few meters, outage of a few stationary transmitters would still allow the indoor navigation and localisation system to work.

The coverage of the stationary transmitters may not be comprehensive. The software running on a computer of the central control unit evaluates the information received from said mobile units. As already pointed out and as can be seen in fig. 2 gaps are provided between the covered areas (footprints) of the stationary transmitters wherein no information can be received in the gaps. The software running in the central control unit deals with this problem as follows:

As soon as an identificator from a stationary transmitter is received by a mobile receiver, the area in which the mobile receiver is located in is known. The position accuracy is defined as being a horizontal plane in which the true position of the mobile receiver is assumed with high probability. The height dimension is limited to the knowledge of the floor in which a user carrying the mobile receiver actually stays. The position accuracy of the user carrying the mobile receiver is limited to the coverage area of the respective stationary transmitter (the confidence interval of the assumed position of the user). As soon as the user leaves this coverage area, the position accuracy of the user decreases continuously with a certain amount of speed (i.e. the walking speed) with respect to time in every possible direction until a new coverage area (footprint) is reached and therefore a new stationary transmitter identificator is received. If such a new identificator is received by the mobile receiver the position accuracy is rising again wherein said position accuracy is limited to the size of the respective coverage area of the stationary transmitter.

All stationary transmitters work even under difficult conditions such as fire and heat or water, for example. The software running on the computer of the central control unit assumes this ability so that the horizontal plane in which the true position of a mobile unit is assumed to expand with a certain probability over the neighboured coverage areas (footprints).

The indoor navigation and localisation system can also be combined with inertial navigation sensors (INS) which can be provided in the mobile receivers. This combination of an INS system with the system of the present invention may compensate for the disadvantages of an INS system which is its drift over time that makes it impossible for navigation. However, the combination of an INS system with the indoor navigation and localisation system according to the present invention adds very useful information to an INS system so that such an INS system can be used also for reliable navigation and localisation tasks. Reference numerals in the claims and in the description are provided only for better understanding the invention and shall not limit the scope of the invention which is defined by the claims only.

### List of reference signs

- 1: building
- 3: mobile unit
- 4: central control unit
- 22, 24: emergency facilities
- 22', 24': stationary transmitters
- 26, 28: beam
- 26', 28': footprint
- 29: footprint
- 30: mobile receiver
- 32: mobile transmitter
- 40: central receiver
- 42: display

## Claims

1. Indoor navigation and localisation system, in particular emergency case navigation and localisation system, preferably in a building (1), having a plurality of stationary transmitters (22', 24') adapted to transmit localisation signals and at least one mobile unit (3) with a mobile receiver (30) adapted to receive said localisation signals,
**characterized**
- **in that** said at least one stationary transmitter (22', 24') is associated to one of a plurality of emergency facilities (22, 24) and
- **in that** each of said stationary transmitters (22', 24') is adapted to transmit an individual location identification message.

2. A system according to claim 1,
**characterized in that**
said stationary transmitter (22', 24') is mounted to or integrated in said emergency facility (22, 24).

3. A system according to claim 1 or 2,
**characterized in that**
said stationary transmitter (22', 24') comprises an autonomous power source.

4. A system according to claim one of claims 1 to 3,
**characterized in that**
said stationary transmitter (22', 24') is powered by a power source of the emergency facility.

5. A system according to claim one of claims 1 to 3,
**characterized in that**
said stationary transmitter (22', 24') comprises an RFID unit which reacts in response to a received request signal transmitted from said mobile receiver (30) wherein said RFID unit is preferably a passive RFID unit powered by said request signal received from said mobile receiver (30).

6. A system according to one of the preceding claims,
**characterized in that**
said emergency facility (22, 24) is
- a fire alarm indicator,
- a sprinkler, or
- an emergency exit indicator.

7. A system according to one of the preceding claims,
**characterized**
- **in that** said system further comprises a central control unit (4) having a central receiver (40) and
- **in that** said mobile unit (3) is provided with a mobile transmitter (32) adapted to transmit an individual mobile unit identification message to said central receiver (40).

8. A system according to claim 7,
**characterized in that**
said mobile unit (3) is provided with a clock adapted to generate time stamp messages and to transmit said time stamp messages via the mobile transmitter (32) to said central receiver (40).

9. A system according to one of the preceding claims,
**characterized in that**
said localisation signals transmitted by said stationary transmitters (22', 24') and received by said mobile receivers (30) are RF signals.

10. A method to locate a mobile unit, preferably in a building, within a system as defined in one of claims 1 to 9,
**characterized by** the steps of
- receiving a location identification message with said mobile unit from a stationary transmitter;
- transmitting said received location identification message together with a mobile unit identification message and a time stamp message from the mobile unit to said central control unit; and
- identifying the location of said mobile unit on the basis of said received identification messages.
